# EUROPEAN PATENT SPECIFICATION

(11) **EP 1 549 158 B1**
(45) Date of publication and mention of the grant of the patent: **07.01.2009**
(21) Application number: 03770690.0
(22) Date of filing: 08.10.2003
(51) Int. Cl.: A23L 1/29, A23L 1/30

(54) **INFANT FORMULA CONTAINING NUCLEOTIDES**
NUKLEOTIDHALTIGE FERTIG-BABYNAHRUNG
PREPARATION POUR NOURRISSON CONTENANT DES NUCLEOTIDES

(30) Priority: 10.10.2002 US 417458 P
(43) Date of publication of application: 06.07.2005
(73) Proprietor: Wyeth, Madison, New Jersey 07940 (US)
(72) Inventor: BURGHER, Anita, Maria, King of Prussia, PA 19406 (US); KAUP, Susan, Marie, Collingswood, NJ 08109 (US); KUHLMAN, Charles, Francis, Media, PA 19063 (US)
(74) Representative: Connelly, Michael John
(86) International application number: PCT/US2003/031875
(87) International publication number: WO 2004/032651

(56) References cited:
- WO-A-98/06277
- US-A- 4 544 559
- US-A- 4 994 442
- US-A- 5 411 751
- US-A- 5 602 109
- US-A1- 2002 004 527
- JANAS L M ET AL: "THE NUCLEOTIDE PROFILE OF HUMAN MILK" PEDIATRIC RESEARCH, WILLIAMS AND WILKINS, BALTIMORE, MD,, US, vol. 16, no. 8, 1 August 1982 (1982-08-01), pages 659-662, XP002048454 ISSN: 0031-3998
- HAMOSH M: "Should infant formulas be supplemented with bioactive components and conditionally essential nutrients present in milk?" JOURNAL OF NUTRITION, WISTAR INSTITUTE OF ANATOMY AND BIOLOGY, PHILADELPHIA, PA,, US, vol. 127, no. 5S, May 1997 (1997-05), pages 971S-974S, XP002112500 ISSN: 0022-3166
- CARVER JANE D ET AL: "The effects of dietary nucleotides on intestinal blood flow in preterm infants." PEDIATRIC RESEARCH. UNITED STATES SEP 2002, vol. 52, no. 3, September 2002 (2002-09), pages 425-429, XP002269144 ISSN: 0031-3998

## Description

### FIELD OF THE INVENTION

The present invention is directed to infant formula compositions which contain nucleotides. More specifically, the present invention relates to preterm or low birth weight infant formula containing nucleotides at levels suitable for feeding preterm infants.

### DESCRIPTION OF THE PRIOR ART

Preterm infants have increased nutrient demands in order to maintain the rapid early life development of body tissue. In pediatric care facilities, the survival of low birth weight infants (LBW > 1000g) and in particular, very low birth weight infants (VLBW < 1000g) has increased. However, the endogenous nutrient storage capabilities of these infants is severely limited.

The premature infant is notably different from the term infant. The initial immaturity and subsequent rapid growth rate of the premature infant necessitates a higher nutrient intake than the term infant. During the past several years, nutritionists have made substantial progress regarding the establishment of the nutrient needs of premature infants and have adjusted the composition of preterm infant formulas accordingly. The composition of preterm infant formula is based primarily on the composition of human breast milk as well as on intra-uterine accretion. Preterm infant formulas have thus been modified to contain appropriately increased amounts of nutrients, such as protein and fat, as well as minerals, such as calcium, phosphorus, copper and zinc.

Means for providing adequate nutrition to premature infants has long been desired. Efforts have been made to enrich standard infant formula in such a manner to enrich its nutrition capabilities particularly in the feeding of premature infants.

Nucleotides are found in all living cells. Mature human breast milk contains thirteen different nucleotides. The five nucleotides which appear in the highest concentration are cytidine monophosphate (CMP), guanosine monophosphate (GMP), adenosine monophosphate (AMP), uridine monophosphate (UMP), and inosine monophosphate (IMP). Human milk further comprises nucleosides, nucleotide polymers and nucleotide adducts capable of contributing to the Total Nucleotide Pool (TNP). However, in the preterm infant, de novo synthesis and the salvage method for nucleotide formation may be inadequate.

Infant formulas for term infants have been fortified with nucleotides to simulate mother's milk and to treat certain specific conditions.

For example, US Patent No. 5,492,899 discloses an infant formula containing CMP, UMP, AMP and GMP to provide a dietary formula that enhances the immune system and alleviates diarrhea.

US Patent No. 4,544,559 discloses a nucleotide enriched humanized milk for infant nourishment which contains AMP, CMP, GMP, IMP and UMP at specific levels.
US Patent Nos. 4,994,442 and 5,086,500 disclose the addition of nucleosides and nucleotides to infant formulas having enhanced physiological properties and which closely resemble mother's milk.

M. Hamosh, J. Nutr. 127 : 9715 - 9745 (1997) is a review article that refers to reports of the use of stated quantities of nucleotides in infant formulas for low birth weight or preterm infants. In Woltil et al., J. Clin. Nutr. 62 : 943 - 949 (1995) the nucleotide concentrations were 5.1 mg/L UMP, 2.2 mg/L GMP, 2.0 mg/L AMP, 1.7 mg/L CMP and 0.7 mg/L IMP. In Sanchez-Pozo et al., Pediatr. Res. 37 : 328 - 333 (1995) the nucleotide concentrations were UMP 0.66 mg/100 kcal, GMP 0.28 mg/100 kcal, AMP 0.25 mg/100 kcal, CMP 0.21/100 kcal and IMP 0.09 mg/ckal.

Henderson et al. docosahexaenoic Pediatr. Res. 1994, 35 : 313 A (abs) teaches that red bloodcell phospholipid acid and arachidonic acid concentrations in very low birth weight infants are not affected by nucelotide supplementation of preemie formula. The supplementation is said to be in amounts and composition similar to human milk, but the numerical values used are not stated.

However, the addition of nucleotides to infant formula to resemble the milk of mother's of preterm infants has not been disclosed. It is postulated that nucleotides obtained from the diet may be essential to the preterm infant playing an important role in cell growth, energy transfer, and promotion of gut maturation and development. Nucleotides may also provide benefits relating to biological effects, including increasing beneficial gut microflora, improving lipid metabolism and enhancing immunity.

### SUMMARY OF THE INVENTION

The present invention is directed to an infant formula composition for feeding preterm infants or low birth weight infants comprising 4.2 mg/L to 11,6 mg/L of CMP; 2.4 mg/L to 8.3 mg/L of UMP; 2.4 mg/L to 6.0 mg/L of GMP; 0.1 mg/L to 1.7 mg/L of IMP; and 3.3 mg/L to 9.9 mg/L of AMP.

### DETAILED DESCRIPTION OF THE INVENTION

The present infant formula compositions have a total nucleotide concentration of 9.3 mg/L to 49.8 mg/L, preferably 12.4 mg/L to 37.4 mg/L and most preferably 15.5 mg/L to 24.9 mg/L.

The present infant formula compositions comprise the following nucleotides in the stated amounts:
a) CMP: 4.2 mg/L to 11.6 mg/L; and preferably 5.3 mg/L to 7.7 mg/L;
b) UMP: 2.4 mg/L to 8.3 mg/L, and preferably 3.0 mg/L to 5.5 mg/L;
c) GMP: 2.4 mg/L to 6.0 mg/L, and preferably 3.0 mg/L to 4.0 mg/L;
d) IMP: 0.1 mg/L to 1.7 mg/L, and preferably 0.1 mg/L to 1.1 mg/L; and
e) AMP: 3.3 mg/L to 9.9 mg/L, and preferably 4.1 mg/L to 6.6 mg/L.

The present infant formulas may be additionally formulated with other nutritionally beneficial ingredients recognized in the art, such as polyunsaturated fatty acids, (e.g. arachidonic acid and docosahexaenoic acid). The present formulas may also contain all vitamins and minerals essential in the diet of the preterm infant. These vitamins and minerals should be present in nutritionally significant amounts. Examples of vitamins and minerals which may be added to the present infant formula compositions include vitamin A, vitamin B complex, vitamin C, vitamin D, vitamin E, vitamin K, calcium, magnesium, sodium, potassium, phosphorous, copper, zinc, chloride, iodine, selenium, iron, niacin, folic acid, pantothenic acid, biotin, choline, inositol and manganese.

The infant formula compositions of the present invention may further comprise macronutrients beneficial to the preterm infant such as carotenoids, taurine, coconut oil, sunflower oil, soy oil, native or synthetic fats, palmitic acid, medium chain triglycerides, lactose, maltodextrin, glucose, bovine oligosaccharides or fractions thereof, skim milk, milk whey, soy protein, rice protein, protein hydrolysates and lactoferrin.

The present infant formulas are for feeding the preterm or low birth weight infant and contain nucleotides at levels found in breast milk of mothers of preterm infants. These levels are quite different than the levels of nucleotides found in the breast milk of mothers of term infants.

The present infant formulas may be in the form of a liquid, either as a ready to feed liquid or as a concentrated liquid requiring dilution with water prior to feeding, or in a powder form requiring reconstitution with water prior to use.

The present infant formula may be prepared by blending appropriate quantities of whey protein concentrate with skimmed milk, lactose, vegetable oils and fat soluble vitamins in deionized water. Preferably, these materials are blended together in quantities sufficient to provide a final concentration of approximately 240 grams/liter. Mineral salts may then be added to the mixture prior to a high temperature/short time pasteurization step. Appropriate mineral salts include calcium chloride, calcium phosphate, sodium citrate, potassium hydroxide, potassium bicarbonate, ferrous sulfate, zinc sulfate, sodium chloride, copper sulfate, potassium iodide, sodium selenite, etc.. The mixture is then homogenized and cooled. Heat-labile vitamins and micronutrients may then be added to the mixture. The mixture is then standardized with deionized water to a final total solids concentration of about 150 to about 160 and preferably about 155 grams per litre, which is equivalent to about 820 kcal per liter. The formula may be sterilized using a conventional ultrahigh temperature process, and then aseptically filled into appropriate packaging. Alternatively, the formula may be filled into glass jars and then retort sterilized.

It would be recognized by one skilled in the art that other known methods of manufacture and sterilization can be used for the preparation of the present infant formula. The present infant formula may also be produced as a concentrated liquid product requiring dilution with an equal volume of water prior to feeding to an infant. Furthermore such an infant formula may be dehydrated, such as in a spray dryer, to create a stable infant formula powder that offers advantages of stability and economy of transport, said powder requiring reconstitution with water prior to feeding to an infant.

### EXAMPLES

### Example 1

A study was conducted to determine the total nucleotide concentration and the concentration of individual nucleotides in the breast milk collected from mothers of newborn, premature infants. The study was a prospective, non-randomized open study. Twenty seven mothers provided milk samples of volume greater than or equal to 20 ml.

The inclusion criteria for the study were as follows: outpatient, healthy women who were 18 to 40 years of age; parity less than 5; lactating; and between 4-18 days post partum on the scheduled day of collection. The study included mothers whose infants were born between 26-32 weeks gestational age, who were appropriate for gestational age and who weighed less than 1800 grams at birth.

Samples of preterm human milk were analyzed for free nucloeosides and free nucleosides after incubation with alkaline phosphatase. The increase in free nucleosides after the enzyme treatment represents the monomeric nucleotide content on a molar basis. The concentrations in Table 1 below are expressed as equivalent monophosphates.

The results of this analysis are set forth in Table 1:

**Table 1**

| | Range (mg/L) | Mean (mg/L) |
|---|---|---|
| CMP | 0.46 - 14.48 | 5.3 |
| UMP | 0.29 - 6.65 | 3.0 |
| GMP | 0.87 - 10.16 | 4.8 |
| IMP | 0.00 - 1.35 | 0.1 |
| AMP | 1.82 - 8.55 | 4.1 |
| Total monomeric nucleotide | 3.44 - 41.19 | 17.3 |

### Example 2

An example of the present infant formula is set forth below.

A typical 4,000 L production batch of ready-to-feed liquid infant formula mixture was manufactured in the following manner.

A fat blend was prepared by combining 86.5 kg of Betapol (Loders Croklaan) 36.1 L of a high-oleic sunflower oil or safflower oil, 8.94 L of soybean oil, 24.7 kg of medium chain triglycerides, 1.36 kg of soy lecithin, 2.47 kg of an oil containing 38% of its fatty acids as arachidonic acid (ARASCO, Martek, Columbia, MD) and 1.65 kg of an oil containing 38% of its fatty acids as docosahexaenoic acid (DHASCO, Martek, Columbia, MD).

The fat-soluble vitamins, vitamin A (vitamin A palmitate), beta-carotene, vitamin D (cholecalciferol), vitamin E (dl-alpha-tocopherol acetate) and vitamin K (phytonadione) were then dispersed in the fat blend.

An amount of heated liquid skim milk or powdered skim milk sufficient to provide 44 kg of protein was added to warm deionized water in a compounding tank to which had been added 3620 g of sodium citrate and 1590 g potassium bicarbonate dissolved in hot water. The fat blend was metered into the compounding tank. The major dry ingredients, lactose, whey protein concentrate and maltodextrin, were added through a powder funnel eductor. The amount of added whey protein concentrate varied according to its protein content and was sufficient to provide 44 kg of protein. Taurine, 221 g was dissolved in hot water and added to the compounding tank. The following minerals were dissolved or dispersed separately in hot water and added to the compounding tank with intensive agitation: calcium phosphate, 2220 g; calcium chloride, 1710g; sodium chloride, 512g; potassium hydroxide, 643 g; ferrous sulfate, 153 g; potassium iodide, 72.5 g of a 1% triturate in lactose; 359 g of a 44.6% solution of zinc sulfate; 598 g of a 2.5% solution of copper sulfate and 7.22 g of a 0.3% sodium selenite triturate in potassium bicarbonate.

The mixture was heated to 96 ± 2°C, held for 30 seconds and then cooled to 66 ± 2°C. The mixture was then homogenized in a two-stage homogenizer, at 2500 psig in the first stage and 500 psig in the second stage. The homogenized mixture was then cooled to 5 - 10°C using a plate heat exchanger.

A sample of the mixture was analyzed for fat, pH and total solids. An appropriate amount of deionized water was added as required to achieve 80% of total dilution and the batch was mixed. A sample was taken for analysis of total solids and pH. The quantity of water required for final dilution was calculated. A portion of this dilution water was used to dilute the nucleotides and water-soluble vitamins before their addition to the mix. The following nucleotides were dissolved in warm water and added to the mix: cytidine 5' monophosphate, 31.7 g; adenosine 5' monophosphate, 27.9 g; uridine 5' monophosphate, disodium salt, 29.7 g; inosine 5' monophosphate, disodium salt, 5.43 g; and guanosine 5' monophosphate, disodium salt, 22.4 g.

Water-soluble vitamins were dissolved in warm water and were added to the mix as follows: Nicotinamide, 109 g; calcium pantothenate, 42.3 g; Thiamine hydrochloride, 8.98 g; Riboflavin, 3.55 g; Pyrodoxine hydrochloride, 5.8 g; Folic acid, 2.51 g; D Biotin, 0.113 g; Cyanocobolamin, 7.24 g and myo-inositol, 104 g, were dissolved in water and added to the mix. Ascorbic acid, 1180 g, was dissolved in warm water and 535 g of potassium bicarbonate were added slowly to neutralize the ascorbic acid. The neutral ascorbate solution was then added to the mix. Citric acid, 106 g was dissolved in warm water and added to the mix. The mix was agitated for 30 minutes. The mix was standardized to total solids of about 123 g per litre.

Twenty hours after the initial homogenization, the mix was homogenized again and sterilized through a Stork UHT (ultra high temperature) aseptic processing system and filled into 100 ml glass jars.

The glass jars were then retort sterilized in a Barriquand rotary steriliser.

The ingredients of this formula were as follows:

| **Ingredients** | **Units** | **/100 ml** | **/100 kcal** |
|---|---|---|---|
| Protein | g | 2.0 | 2.44 |
| Fat | g | 4.4 | 5.37 |
| Carbohydrate | g | 8.6 | 10.5 |
| Linoleic Acid | mg | 550 | 671 |
| Energy | kcal | 82 | 100 |
| | | | |
| Vitamin A | mcg | 90 | 110 |
| Vitamin D3 | mcg | 1.5 | 1.8 |
| Vitamin E | mg | 1.2 | 1.5 |
| Vitamin K1 | mcg | 8 | 9.76 |
| Vitamin B1 | mcg | 120 | 146 |
| Vitamin B2 | mcg | 200 | 244 |
| Vitamin B6 | mcg | 72 | 88 |
| Vitamin B12 | mcg | 0.3 | 0.37 |
| Niacin (NE) | mcg | 820 | 1000 |
| Folic Acid | mcg | 48 | 59 |
| Pantothenic Acid | mcg | 450 | 549 |
| Biotin | mcg | 2.4 | 2.9 |
| Vitamin C | mg | 11 | 13.4 |
| Calcium | mg | 80 | 97.6 |
| Phosphorus | mg | 42.5 | 51.8 |
| Magnesium | mg | 8 | 9.76 |
| Iron | mg | 0.8 | 0.98 |
| Zinc | mg | 0.8 | 0.98 |
| Manganese | mcg | 10 | 12.20 |
| Copper | mcg | 82.5 | 101 |
| Iodide | mcg | 10 | 12.2 |
| Sodium | mg | 35 | 42.7 |
| Potassium | mg | 85 | 104 |
| Chloride | mg | 60 | 73.2 |
| | | | |
| Choline | mg | 15 | 18.3 |
| Inositol | mg | 4.5 | 5.49 |
| Taurine | mg | 4.8 | 5.9 |
| | | | |
| CMP | mg | 0.7 | 0.9 |
| UMP | mg | 0.5 | 0.6 |
| GMP | mg | 0.4 | 0.5 |
| IMP | mg | 0.1 | 0.12 |
| AMP | mg | 0.6 | 0.7 |

### Example 3

The following infant formula acccording to the present invention was prepared according to the process described in Example 2.

| **Ingredients** | **Units** | **/100 ml** | **/100 kcal** |
|---|---|---|---|
| Protein | g | 2.20 | 2.70 |
| Fat | g | 4.23 | 5.20 |
| Carbohydrate | g | 8.62 | 10.6 |
| Linoleic Acid | mg | 550 | 677 |
| Energy | kcal | 81.3 | 100 |
| | | | |
| Vitamin A | mcg | 224 | 275 |
| Vitamin D3 | mcg | 3.48 | 4.28 |
| Vitamin E | mg | 4.09 | 5.03 |
| Vitamin K1 | mcg | 6.1 | 7.5 |
| Vitamin B1 | mcg | 142 | 175 |
| Vitamin B2 | mcg | 203 | 250 |
| Vitamin B6 | mcg | 122 | 150 |
| Vitamin B12 | mcg | 0.33 | 0.41 |
| Niacin (NE) | mcg | 2353 | 2870 |
| Folic Acid | mcg | 40.6 | 50.0 |
| Pantothenic Acid | mcg | 1016 | 1250 |
| Biotin | mcg | 3.25 | 4.00 |
| Vitamin C | mg | 14.6 | 18.0 |
| Calcium | mg | 102. | 125 |
| Phosphorus | mg | 61 | 75.0 |
| Magnesium | mg | 8.1 | 10.0 |
| Iron | mg | 0.81 | 1.00 |
| Zinc | mg | 0.81 | 1.00 |
| Manganese | mcg | 4.1 | 5.0 |
| Copper | mcg | 91 | 112 |
| Iodide | mcg | 24 | 30.0 |
| Sodium | mg | 40.6 | 50.0 |
| Potassium | mg | 81 | 100 |
| | | | |
| Chloride | mg | 73.2 | 90.0 |
| Selenium | mcg | 1.71 | 2.10 |
| Choline | mg | 13.0 | 16.0 |
| Inositol | mg | 30.08 | 37.00 |
| Taurine | mg | 4.80 | 5.90 |
| | | | |
| CMP | mg | 0.7 | 0.9 |
| UMP | mg | 0.5 | 0.6 |
| GMP | mg | 0.4 | 0.5 |
| IMP | mg | 0.1 | 0.12 |
| AMP | mg | 0.6 | 0.7 |

## Claims

1. An infant formula composition for feeding preterm infants or low birth weight infants comprising 4.2 mg/L to 11.6 mg/L of CMP; 2.4 mg/L to 8.3 mg/L of UMP; 2.4 mg/L to 6.0 mg/L of GMP; 0.1 mg/L to 1.7 mg/L of IMP; and 3.3 mg/L to 9.9 mg/L of AMP.

2. The infant formula composition of claim 1, comprising 5.3 mg/L to 7.7 mg/L of CMP; 3.0 mg/L to 5.5 mg/L of UMP; 3.0 mg/L to 4.0 mg/L of GMP; 0.1 mg/L to 1.1 mg/L of IMP; and 4.1 mg/L to 6.6 mg/L of AMP.

3. An infant formula composition of claim 1 having a total nucleotide concentration of 9.3 mg/L to 49.8 mg/L.

4. The infant formula composition of claim 3 having a total nucleotide concentration of 12.4 mg/L to 37.4 mg/L.

5. The infant formula composition of claim 4 having a total nucleotide concentration of 15.5 mg/L to 24.9 mg/L.

6. Use of CMP, UMP, GMP, IMP; and AMP for the manufacture of a medicament in the form of an infant formula composition for feeding preterm infants or low birth weight infants, wherein the composition fed comprises 4.2 mg/L to 11.6 mg/L of CMP; 2.4 mg/L to 8.3 mg/L of UMP; 2.4 mg/L to 6.0 mg/L of GMP; 0.1 mg/L to 1.7 mg/L of IMP; and 3.3 mg/L to 9.9 mg/L of AMP.

7. Use according to claim 6 wherein the infant formula is in the form of a concentrated liquid requiring dilution with water prior to feeding, or in a powder form requiring reconstitution with water prior to use.

## Patentansprüche

1. Säuglingsnahrungszusammensetzung zum Füttern von Frühgeborenen oder Säuglingen mit geringem Geburtsgewicht, die 4,2 mg/l bis 11,6 mg/l CMP; 2,4 mg/l bis 8,3 mg/l UMP; 2,4 mg/l bis 6.0 mg/l GMP; 0,1 mg/l bis 1,7 mg/l IMP und 3,3 mg/l bis 9,9 mg/l AMP umfasst.

2. Säuglingsnahrungszusammensetzung nach Anspruch 1, die 5,3 mg/l bis 7,7 mg/l CMP; 3,0 mg/l bis 5,5 mg/l UMP; 3,0 mg/l bis 4,0 mg/l GMP; 0,1 mg/l bis 1,1 mg/l IMP und 4,1 mg/l bis 6,6 mg/l AMP umfasst.

3. Säuglingsnahrungszusammensetzung nach Anspruch 1 mit einer Gesamtnukleotidkonzentration von 9,3 mg/l bis 49,8 mg/l.

4. Säuglingsnahrungszusammensetzung nach Anspruch 3 mit einer Gesamtnukleotidkonzentration von 12,4 mg/l bis 37,4 mg/l.

5. Säuglingsnahrungszusammensetzung nach Anspruch 4 mit einer Gesamtnukleotidkonzentration von 15,5 mg/l bis 24,9 mg/l.

6. Verwendung von CMP, UMP, GMP, IMP und AMP zur Herstellung eines Arzneimittels in der Form einer Säuglingsnahrungszusammensetzung zum Füttern von Frühgeborenen oder Säuglingen mit geringem Geburtsgewicht, wobei die gefütterte Zusammensetzung 4,2 mg/l bis 11,6 mg/l CMP; 2,4 mg/l bis 8,3 mg/l UMP; 2,4 mg/l bis 6,0 mg/l GMP; 0,1 mg/l bis 1,7 mg/l IMP und 3,3 mg/l bis 9,9 mg/l AMP umfasst.

7. Verwendung nach Anspruch 6, wobei die Säuglingsnahrung in der Form einer konzentrierten Flüssigkeit, die vor dem Füttern eine Verdünnung mit Wasser erfordert, oder in einer Pulverform, die vor dem Gebrauch eine Wiederherstellung mit Wasser erfordert, ist.

## Revendications

1. Composition de formule pour nourrissons pour nourrir des nourrissons prématurés ou des nourrissons de faible poids de naissance comprenant 4,2 mg/l à 11,6 mg/l de CMP ; 2,4 mg/l à 8,3 mg/l d'UMP ; 2,4 mg/l à 6,0 mg/l de GMP ; 0,1 mg/l à 1,7 mg/l d'IMP ; et 3,3 mg/l à 9,9 mg/l d'AMP.

2. Composition de formule pour nourrissons selon la revendication 1, comprenant 5,3 mg/l à 7,7 mg/l de CMP ; 3,0 mg/l à 5,5 mg/l d'UMP ; 3,0 mg/l à 4,0 mg/l de GMP : 0,1 mg/l à 1,1 mg/l d'IMP ; et 4,1 mg/l à 6,6 mg/l d'AMP.

3. Composition de formule pour nourrissons selon la revendication 1 ayant une concentration totale de nucléotides de 9,3 mg/l à 49,8 mg/l.

4. Composition de formule pour nourrissons selon la revendication 3 ayant une concentration totale de nucléotides de 12,4 mg/l à 37,4 mg/l.

5. Composition de formule pour nourrissons selon la revendication 4 ayant une concentration totale de nucléotides de 15,5 mg/l à 24,9 mg/l.

6. Utilisation de CMP, UMP, GMP, IMP et AMP pour la fabrication d'un médicament sous la forme d'une composition de formule pour nourrissons pour nourrir des nourrissons prématurés ou des nourrissons de faible poids de naissance, dans laquelle la composition administrée comprend 4,2 mg/l à 11,6 mg/l de CMP ; 2,4 mg/l à 8,3 mg/l d'UMP ; 2,4 mg/l à 6,0 mg/l de GMP ; 0,1 mg/l à 1,7 mg/l d'IMP ; et 3,3 mg/l à 9,9 mg/l d'AMP.

7. Utilisation selon la revendication 6 dans laquelle la formule pour nourrissons est sous la forme d'un liquide concentré nécessitant une dilution avec de l'eau avant administration, ou sous la forme d'une poudre nécessitant une reconstitution avec de l'eau avant utilisation.
